(19) Europäisches Patentamt
European Patent Office
Office européen des brevets

(11) **EP 1 342 524 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(51) Int Cl.:
*B23F 5/12* (2006.01)          *B23F 23/10* (2006.01)

(21) Anmeldenummer: **03004508.2**

(22) Anmeldetag: **28.02.2003**

(54) **Wälzstossmaschine und Verfahren zum Betrieb einer Wälzstossmaschine**

Generating slotting machine and method of operating such a machine

Machine à mortaiser en développante et procédé d'utilisation de celle machine

(84) Benannte Vertragsstaaten:
**AT BE BG CH CY CZ DE DK EE ES FI FR GB GR HU IE IT LI LU MC NL PT SE SI SK TR**

(30) Priorität: **07.03.2002 DE 10209971**

(43) Veröffentlichungstag der Anmeldung:
**10.09.2003 Patentblatt 2003/37**

(73) Patentinhaber: **LIEBHERR-VERZAHNTECHNIK GmbH**
**87437 Kempten (DE)**

(72) Erfinder: **Schuon, Joachim**
**87474 Buchenberg (DE)**

(74) Vertreter: **Laufhütte, Dieter et al**
**Lorenz-Seidler-Gossel**
**Widenmayerstrasse 23**
**80538 München (DE)**

(56) Entgegenhaltungen:
**EP-A- 0 074 659          EP-A- 0 135 064**
**DE-A- 3 314 524          DE-A- 19 858 669**

**Beschreibung**

Die Erfindung betrifft eine Wälzstoßmaschine zum Herstellen bzw. Bearbeiten von Zahnrädern mit einem motorisch drehbaren Maschinentisch zur Aufnahme des Werkstücks und einer in eine gezielte Hub- und überlagerte Rotationsbewegung versetzbarer Stoßspindel mit einem daran befestigten Werkzeug, beispielsweise einem Schneidrad, wobei die Hublage über eine erste im Hubantrieb angeordnete Messeinrichtung erfassbar ist.

Bei derartigen Wälzstoßmaschinen führen das zu bearbeitende Werkstück und das Stoßwerkzeug bei der Herstellung bzw. Bearbeitung von Zahnrädern eine Drehbewegung aus. Die Drehachsen des Werkstücks und des an der Stoßspindel angeordneten Schneidrades sind bei der Herstellung zylindrischer Werkstücke vorzugsweise parallel zueinander angeordnet. Der Drehung des Stoßwerkzeuges, d.h. des Schneidrades, ist hierbei eine vorzugsweise geradlinige Hubbewegung in Richtung der Achse des Werkzeuges zur Spanabnahme überlagert.

Werden Zahnräder mit Geradverzahnung hergestellt, werden das Werkstück und das Stoßwerkzeug in gleichem Maße gedreht. Sollen dagegen Zahnräder mit Schrägverzahnung hergestellt werden, muss je nach Schrägungswinkel der Verzahnung eine mehr oder weniger starke Zusatzdrehung des Schneidrades erfolgen. Das Schneidrad muss außer der Wälzdrehung noch eine oszillierende Schraubenbewegung ausführen. Diese oszillierende Schraubenbewegung der Stoßspindel wird bei Ausführung gemäß dem Stand der Technik durch eine Schraubenführung erzwungen. Bei Wälzstoßmaschinen älterer Bauart sind diese Schraubenführungen als konventionelle Gleitführungen ausgeführt. Moderne schnell laufende Stoßmaschinen sind dagegen mit hydrostatisch gelagerten Führungen ausgerüstet. Diese sind zwar weitgehend verschleißlos und leichtgängig, da die mechanische Reibung unterdrückt wird. Sämtliche Schraubenführungen haben jedoch den Nachteil, dass mit ihnen nur bestimmte Schrägungswinkel beim herzustellenden Zahnrad erzielbar sind. Die üblichen Wälzstoßmaschinen sind mit einer festen Schraubenführung ausgerüstet. Hier ergibt sich für den beim Zahnrad erzielbaren Schrägungswinkel folgende Gesetzmäßigkeit:

$$\sin\beta = \frac{m_n \cdot \pi \cdot z_0}{p_{z0}}$$

In dieser Beziehung ist $\beta$ der Schrägungswinkel, $z_0$ die Schneidradzähnezahl, $m_n$ der Normalmodul und $p_{z0}$ die Steigungshöhe der Schraubenführung.

Hieraus folgt, dass der Schrägungswinkel $\beta$ am Werkstück nur im Bereich zwischen der kleinsten und größtmöglichen Zähnezahl des Stoßwerkzeugs variierbar ist. Neben diesem Nachteil ist der gesamte Antriebsstrang zusätzlich noch spielbehaftet. Darüber hinaus ist er elastisch verformbar. In der Vergangenheit wurden bereits verschiedene Versuche unternommen, anstelle der Schraubenführungen flexiblere Antriebe für die Rotationsbewegung des Schneidrades bereitzustellen. Es sind verschiedene Lösungen vorgeschlagen worden, die allerdings im Ergebnis zu keiner zufriedenstellenden Produktivität und Verzahnqualität geführt haben.

Aus DE 33 14 524 A ist dabei eine Wälzstoßmaschine zum Bearbeiten von Zahnrädern mit einem motorisch drehbaren Maschinentisch zur Aufnahme des Werkstücks und einer in eine gezielte Hub- und überlagerte Rotationsbewegung versetzbare Stoßspindel mit einem daran befestigten Schneidrad bekannt, wobei die Hublage über eine erste im Hubantrieb angeordnete Messeinrichtung erfassbar ist. Die Rotationsbewegung wird dabei von einem Schneckenantrieb, die Schrägung von einem Hubzylinder an der Schneckenstange erzeugt. Die Rotationsbewegung wird von einer Meßeinrichtung an der Schneckenstange bestimmt. Allerdings ist der indirekte Antrieb mit seinen vielen Teilen zwangsläufig ebenso wie der Hubantrieb spielbehaftet, so daß bei hoher Fertigungsrate eine ausreichende Genauigkeit der Fertigung nicht garantiert werden kann.

Aufgabe der Erfindung ist es daher, eine Wälzstoßmaschine an die Hand zu geben, mit der einerseits gewünschte Verzahngeometrien der herzustellenden bzw. zu bearbeitenden Zahnräder beliebig einstellbar sind, wobei andererseits eine hohe Verzahnqualität und eine zufriedenstellende Produktivität bei der Herstellung der Zahnräder erreichbar sind.

Erfindungsgemäß wird diese Aufgabe ausgehend von einer gattungsgemäßen Wälzstoßmaschine durch die zusätzlichen kennzeichnenden Merkmale des Anspruchs 1 gelöst. Demnach wird die überlagerte Rotationsbewegung der Stoßspindel über einen Direktantrieb aufgeprägt und an der Stoßspindel ist eine zweite Messeinrichtung, welche eine Längenmesseinrichtung ist, die die Abweichung der aktuellen Hublage der Stoßspindel von der gewünschten Hublage der Stoßspindel erfasst, zum Erfassen von Abweichungen zu ihrem vorgegebenen Bewegungsverlauf angeordnet.

Vorteilhafte Ausgestaltungen der Erfindung sind in den sich an den Hauptanspruch anschließenden Unteransprüchen wiedergegeben.

Demnach kann der Hubantrieb aus einem motorisch antreibbaren Exzenterrad und einem Übertragungsgestänge bestehen, das die Exzenterbewegung des Exzenterrades auf die Stoßspindel überträgt. Derartige Hubantriebe sind grundsätzlich bereits bekannt und zeichnen sich durch ein besonders robustes Verhalten aus, das insbesondere bei den hohen Hubzahlen, die für Wälzstoßmaschinen benötigt werden, vorteilhaft ist. So werden hier üblicherweise Hubzahlen von mehr als 2000 Hüben pro Minute bei der Herstellung und Bearbeitung von Zahnrädern gefahren. Das Exzenterrad kann über ein Getriebe mit einem Motor verbunden sein. Die erste

Messeinrichtung kann als Winkelmesssystem zur Erfassung des Drehwinkels des Exzenterrades ausgestaltet sein. Hiermit kann also in die Steuerung der Wälzstoßmaschine genau die Soll-Hublage der Stoßspindel eingebbar sein. Die aufgrund dieser Information durchgeführte Steuerung wird mittels des erfindungsgemäßen Messignals, das über die zweite Messeinrichtung unmittelbar oder mittelbar an der Stoßspindel abgegriffen wird, korrigiert, so dass eventuelle Fehler bzw. Ungenauigkeiten des Hubantriebes, die sich auf die Bewegungsbahn der Stoßspindel übertragen, korrigierbar sind.

Der Direktantrieb, über den der Stoßspindel die Rotationsbewegung aufgeprägt wird, ist vorteilhaft ein bürstenloser Torque-Motor, wie er an sich im Stand der Technik bereits bekannt ist. Derartige vergleichsweise langsam drehende Motoren zeichnen sich durch eine sehr hohe Beschleunigung und extrem gute Genauigkeit aus.

Vorteilhaft ist die zweite Messeinrichtung eine Längenmesseinrichtung, die die Abweichung der aktuellen Hublage der Stoßspindel von dem gewünschten Hub der Stoßspindel dynamisch erfasst.

Die Erfindung betrifft weiterhin ein erfindungsgemäßes Verfahren zum Betrieb einer vorgenannten Wälzstoßmaschine. Dieses Verfahren ist dadurch gekennzeichnet, dass das von der zweiten Messeinrichtung gelieferte Fehlersignal zur dynamischen Korrektur der Drehbewegung der Stoßspindel und des mit ihr verbundenen Schneidrades und/oder der Rotationsbewegung des Werkstücks dient. Es wird also das Fehlersignal nicht etwa zu einer Vorsteuerung des Hubantriebsmotors benutzt, sondern das Fehlersignal wird zur dynamischen Korrektur der Drehbewegung der Stoßspindel herangezogen. Dabei kann diese Drehbewegungskorrektur entweder bei der Drehbewegung der Stoßspindel und damit des mit dieser verbundenen Schneidrades einfließen. Alternativ kann aber auch die Rotationsbewegung des Werkstückes entsprechend korrigiert werden. Natürlich können auch beide Rotationsbewegungen, also diejenige des Schneidrades einerseits und diejenige des Werkstückes andererseits soweit korrigiert werden, dass der Gesamtkorrekturwert erreicht wird.

Die dynamische Korrektur der Drehbewegung des Schneidrades und gemeinsam mit dieser der Drehbewegung des Werkstücks kann besonders vorteilhaft in Abhängigkeit von den jeweils zu bewegenden Massen aufgeteilt werden, um hier eine bei den hohen Vorschubgeschwindigkeiten möglichst verzögerungsfreie dynamische Korrektur der Drehbewegung zu erhalten.

Weitere Einzelheiten und Vorteile werden anhand eines in der Zeichnung dargestellten Ausführungsbeispiels näher erläutert. Es zeigen:

Figur 1: eine schematische Darstellung einer Wälzstoßmaschine in Seitenansicht und

Figur 2: eine Detailansicht aus Blickrichtung y gemäß Figur 1.

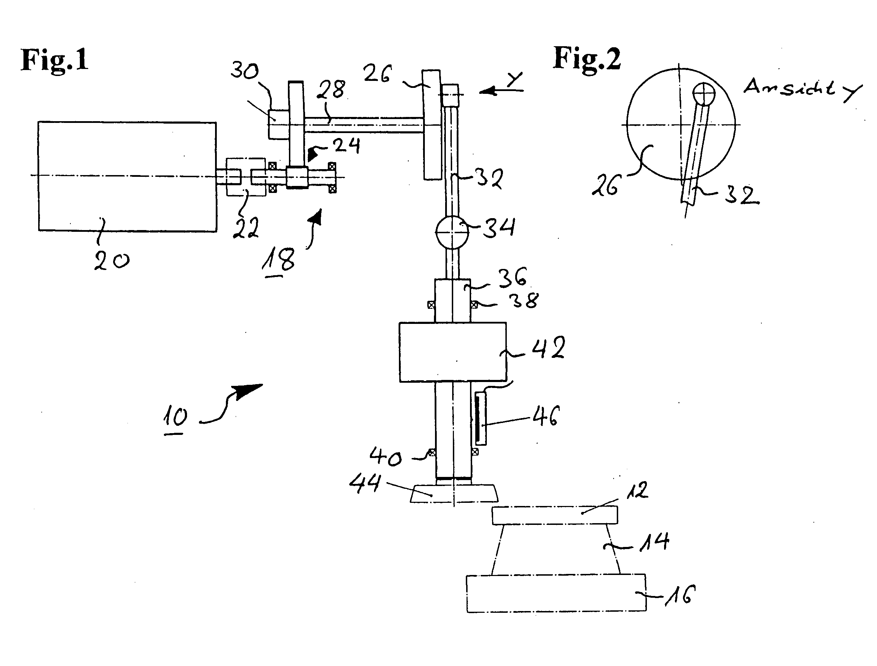

Bei der in Figur 1 dargestellten Ausführungsform der erfindungsgemäßen Wälzstoßmaschine 10 ist ein Werkstück 12, aus welchem ein Zahnrad hergestellt werden soll, auf einem Maschinentisch 14 aufgespannt. Der Maschinentisch 14 ist über einen Antrieb 16 drehbar, wobei der Antrieb 16 als Direktantrieb oder als Motorgetriebeeinheit realisierbar ist.

Die Wälzstoßmaschine 10 weist einen Hubantrieb 18 auf, der hier aus einem Motor 20 besteht, der über eine Kupplung 22 und ein Zahnradgetriebe 24 mit einem Exzenterrad 26 in Wirkverbindung steht. Auf der Welle 28 des Exzenterrads 26 ist eine Winkelmesseinrichtung 30 angeordnet. Diese Winkelmesseinrichtung 30 dient als sogenannte erste Messeinrichtung.

An dem Exzenterrad 26 ist drehbar ein Übertragungsgestänge 32 angelenkt, das über eine weitere Gelenkverbindung 34 mit einer Stoßspindel 36 verbunden ist. Die Stoßspindel 36 ist in Hubrichtung und in Drehrichtung um ihre Symmetrieachse drehbar gelagert, was hier durch die Lager 38 und 40 angedeutet ist.

Die Stoßspindel 36 wird über einen Direktantrieb 42 in gezielte Drehbewegung um ihre eigene Symmetrieachse versetzt. Der Direktantrieb 42 besteht aus einem Torque-Motor, der zwar eine langsame Maximaldrehzahl aufweist, der andererseits aber eine sehr schnelle Beschleunigung der Stoßspindel 36 ermöglicht. Starr mit der Stoßspindel 36 ist ein Schneidrad 44 verbunden, welches als Schneidwerkzeug zur Herstellung bzw. Bearbeitung des Zahnrades 12 dient.

In an sich bekannter Weise ist zur Erzeugung von Schrägverzahnungen für jede Hubstellung des Schneidrads 44 ein definierter Drehwinkel des Schneidrades erforderlich. Über eine hier nicht näher dargestellte Steuerung wird sicher gestellt, dass einem entsprechenden Hub eine entsprechende Drehwinkelstellung entspricht. Dabei kann sicher gestellt werden, dass diese eindeutige Zuordnung auch bei einer Hubzahl von mehr als 2000 Hüben pro Minute erfolgt. Mittels der Winkelmesseinrichtung 30 kann die Hubposition, der ja ein entsprechender Drehwinkel des Schneidrads 44 entspricht, bestimmt werden. Somit wird je nach gemessener Position des Drehwinkels des Exzenterrads 26 über den Direktdrehantrieb 42 die Stoßspindel in die gewünschte und eindeutig zugeordnete Winkellage gedreht.

Da nun der Hubantrieb 18 jedoch fehlerbehaftet ist und dadurch ohne weitere Maßnahmen bei Verwendung des Direktdrehantriebs keine hinreichend gute Verzahnqualität mit den hergestellten Zahnrädern erreicht werden könnte, ist erfindungsgemäß eine zusätzliche Messeinrichtung 46 im Bereich der Stoßspindel vorgesehen, die hier als Längenmesseinrichtung ausgebildet ist und welche Abweichungen des aktuellen Hubes der Stoßspindel von dem gewünschten Hub der Stoßspindel erfasst. Die hier festgestellten Abweichungen der Ist-Hublage von der Soll-Hublage werden nun nicht in Art einer Vorsteuerung als Korrekturbefehl an den Motor 20 gegeben.Vielmehr wird der Korrekturwert aus der Messeinrichtung 46 zur Korrektur der Rotationsbewegung der Stoßspindel und damit des Schneidrads verwendet. Hier wird also der Direktdrehantrieb 42 mit einem entsprechenden Korrektursignal beaufschlagt, um den ideal gewünschten Drehwinkel des Schneidrades 44 dem Ist-Wert des Hubes zuzuordnen.

Anstelle der Beaufschlagung des Direktdrehantriebes 42 mit dem Korrekturwert kann auch der Antrieb 16 des Maschinentisches 14 mit einem entsprechenden Korrekturwert belegt werden. Alternativ kann auch der entsprechende Korrekturwert auf den Direktdrehantrieb 42 und den Antrieb 16 des Maschinentisches 14 verteilt werden.

Die Herstellung von Zahnrädern mittels der erfindungsgemäßen Wälzstoßmaschine führt zu einer erheblichen Qualitätsverbesserung, da das Spiel im Kurbeltrieb des Hubantriebs 18 vollkommen dynamisch kompensiert wird.

**Patentansprüche**

1. Wälzstoßmaschine zum Herstellen bzw. Bearbeiten von Zahnrädern mit einem motorisch drehbaren Maschinentisch (14) zur Aufnahme des Werkstücks (12), einer in eine gezielte Hub- und überlagerte Rotationsbewegung versetzbare Stoßspindel (36) mit einem daran befestigten Werkzeug (44), vorzugsweise Schneidrad, wobei die Hublage über eine erste im Hubantrieb (18) angeordnete Messeinrichtung (30) erfassbar ist,
**dadurch gekennzeichnet,**
**dass** die überlagerte Rotationsbewegung der Stoßspindel (36) über einen Direktdrehantrieb (42) erzeugbar ist und dass im Bereich der Stoßspindel (36) eine zweite Messeinrichtung (46), welche eine Längenmesseinrichtung ist, die die Abweichung der aktuellen Hublage der Stoßspindel (36) von der gewünschten Hublage der Stoßspindel (36) erfaßt, zum Erfassen von Abweichungen zu ihrem vorgegebenen Bewegungsverlauf angeordnet ist.

2. Wälzstoßmaschine nach Anspruch 1, **dadurch gekennzeichnet, dass** der Hubantrieb (18) aus einem motorisch antreibbaren Exzenterrad (26) und einem Übertragungsgestänge (32) besteht, das die Exzenterbewegung des Exzenterrades (26) auf die Stoßspindel (36) überträgt.

3. Wälzstoßmaschine nach Anspruch 2, **dadurch gekennzeichnet, dass** das Exzenterrad (26) über ein Getriebe (24) mit einem Motor (20) verbunden ist.

4. Wälzstoßmaschine nach Anspruch 1 oder Anspruch 2, **dadurch gekennzeichnet, dass** die erste Messeinrichtung (30) ein Winkelmesssystem zur Erfassung des Drehwinkels des Exzenterrades (26) ist.

5. Wälzstoßmaschine nach einem der Ansprüche 1 bis 4, **dadurch gekennzeichnet, dass** der Direktantrieb (42) zur Aufprägung der Rotationsbewegung der Stoßspindel (36) ein bürstenloser Torque-Motor ist.

6. Verfahren zum Betrieb einer Wälzstoßmaschine nach einem der Ansprüche 1 bis 5, **dadurch gekennzeichnet, dass** das von der zweiten Messeinrichtung (46) gelieferte Fehlersignal zur dynamischen Korrektur der Drehbewegung der Stoßspindel (36) und des mit ihr verbundenen Schneidrades (44) und/oder der Drehbewegung des Werkstücks (12) dient.

7. Verfahren zum Betrieb einer Wälzstoßmaschine nach Anspruch 6, **dadurch gekennzeichnet, dass** die dynamische Korrektur der relativen Drehbewegung zwischen der Stoßspindel (36) und des mit ihr verbundenen Schneidrades (44) einerseits und der Drehbewegung des Werkstücks (12) andererseits auf die Drehbewegung der Stoßspindel (36) und des mit ihr verbundenen Schneidrades (44) und die Drehbewegung des Werkstücks (12) in Abhängigkeit von den jeweils zu bewegenden Massen aufteilbar ist.

**Claims**

1. A generating slotting machine for producing or machining gear wheels, comprising a power-rotatable machine table (14) for receiving the workpiece (12), a slotting spindle (36) with a tool (44) attached thereto, preferably a cutting wheel, which can be put into a selective lifting movement and superimposed rotary movement, the lifting position being detectable via a first measuring means (30) disposed in the lifting drive (18),
**characterized in**
**that** the superimposed rotary movement of the slotting spindle (36) can be generated via a direct rotary drive (42) and that in the vicinity of the slotting spindle (36) a second measuring means (46), which is a length measuring means detecting the deviation of the current lifting position of the slotting spindle (36) from the desired lifting position of the slotting spindle (36), is arranged for detecting deviations from its specified path of movement.

2. The generating slotting machine as claimed in claim 1, **characterized in that** the lifting drive (18) consists of a power-actuatable eccentric wheel (26) and a transmission linkage (32) which transmits the eccentric movement of the eccentric wheel (26) to the slotting spindle (36).

3. The generating slotting machine as claimed in claim 2, **characterized in that** the eccentric wheel (26) is connected with a motor (20) via a transmission (24).

4. The generating slotting machine as claimed in claim 1 or claim 2, **characterized in that** the first measuring means (30) is an angle measuring system for detecting the angle of rotation of the eccentric wheel (26).

5. The generating slotting machine as claimed in any of claims 1 to 4, **characterized in that** the direct drive (42) for imparting the rotary movement of the slotting spindle (36) is a brushless torque motor.

6. A method for operating a generating slotting machine as claimed in any of claims 1 to 5, **characterized in that** the error signal supplied by the second measuring means (46) is used for the dynamic correction of the rotary movement of the slotting spindle (36) and of the cutting wheel (44) connected therewith and/or of the rotary movement of the workpiece (12).

7. The method for operating a generating slotting machine as claimed in claim 6, **characterized in that** the dynamic correction of the relative rotary movement between the slotting spindle (36) and the cutting wheel (44) connected therewith on the one hand and of the rotary movement of the workpiece (12) on the other hand can be divided into the rotary movement of the slotting spindle (36) and the cutting wheel (44) connected therewith and the rotary movement of the workpiece (12) in dependence on each of the masses to be moved.

**Revendications**

1. Machine à mortaiser en développante, pour la fabrication ou l'usinage de roues dentées, qui présente une table de machine (14) apte à tourner à l'aide d'un moteur et qui reprend la pièce (12), une broche à mortaiser (36) qui peut être amenée de manière contrôlée dans un déplacement d'avancement superposés à un déplacement de rotation et sur laquelle est fixé un outil (44), de préférence une roue de découpe, la position d'avancement pouvant être détectée par un premier dispositif de mesure (30) disposé dans l'entraînement d'avancement (18), **caractérisée en ce que**

le déplacement de rotation superposé de la broche à mortaiser (36) peut être créé par un entraînement direct en rotation (42) et **en ce que** dans la zone de la broche à mortaiser (36), un deuxième dispositif de mesure (46) qui est un dispositif de mesure de longueur qui détecte l'écart entre la position d'avancement actuelle de la broche à mortaiser (36) et la position d'avancement souhaitée de la broche à mortaiser (36) est prévu pour détecter les écarts par rapport au déroulement souhaité de son déplacement.

2. Machine à mortaiser en développante selon la revendication 1, **caractérisée en ce que** l'entraînement d'avancement (18) est constitué d'une roue excentrique (26) qui peut être entraînée par un moteur et d'une tringle de transfert (32) qui transfère à la broche à mortaiser (36) le déplacement excentrique de la roue excentrique (26).

3. Machine à mortaiser en développante selon la revendication 2, **caractérisée en ce que** la roue excentrique (26) est reliée à un moteur (20) par une transmission (24).

4. Machine à mortaiser en développante selon la revendication 1 ou la revendication 2, **caractérisée en ce que** le premier dispositif de mesure (30) est un système de mesure d'angle qui détecte l'angle de rotation de la roue excentrique (26).

5. Machine à mortaiser en développante selon l'une des revendications 1 à 4, **caractérisée en ce que** l'entraînement direct (42) qui imprime le déplacement de rotation de la broche à mortaiser (36) est un moteur couple sans balais.

6. Procédé d'utilisation d'une machine à mortaiser en développante selon l'une des revendications 1 à 5, **caractérisé en ce que** le signal d'erreur délivré par le deuxième dispositif de mesure (46) sert à corriger de manière dynamique le déplacement de rotation de la broche à mortaiser (36) et de la roue de découpe (44) qui lui est reliée et/ou du déplacement de rotation de la pièce (12).

7. Procédé d'utilisation d'une machine à mortaiser en développante selon la revendication 6, **caractérisé en ce que** la correction dynamique du déplacement de rotation relatif entre la broche à mortaiser (36) et la roue de découpe (44) qui lui est reliée et du déplacement de rotation de la pièce (12), d'autre part, peut être divisée en le déplacement de rotation de la broche à mortaiser (36) et de la roue de découpe (44) qui lui est reliée et le déplacement de rotation de la pièce (12) en fonction des masses respectives à déplacer.

**Fig.1**

**Fig.2**

Ansicht Y